# EUROPEAN PATENT APPLICATION

(11) **EP 1 051 049 A2**
(43) Date of publication of application: **08.11.2000**
(21) Application number: 00303574.8
(22) Date of filing: 27.04.2000
(51) Int. Cl.: H04Q 7/20

(54) **A radio communication apparatus for subscriber premises**

(30) Priority: 04.05.1999 US 305217
(71) Applicant: Nortel Networks Limited, Montreal, Quebec H2Y 3Y4 (CA)
(72) Inventor: Barrets, John, Brixham, Devon TQ5 0LF (GB)
(74) Representative: Bewley, Ewan Stuart

(57) **Abstract**

The present invention relates to radio communications subscriber apparatus and, in particular, although not exclusively, to the installation of equipment for new subscribers to a telecommunications network comprising a fixed wireless access system. An antenna arrangement is disclosed for providing communication links in a fixed wireless access system, the antenna including receiver means including a receive signal demodulator; wherein a signal processing unit receives signals from the received signal demodulator which signal processing unit includes indicators relating to a received signal. The indicators are operable to indicate signal level and some form of signal quality measure e.g. signal vector error, signal to interference or timing stability. In the alignment phase the processor analyses the received level and quality while the antenna arrangement is scanned across the signal direction (towards the base station in a FWA system). From the stored scan data the processor identifies the best data set and sets an acceptance window. When the antenna arrangement is rescanned the processor identifies when the received signal conditions are within the window. From such an indication the antenna can be secured in a preferred orientation. The invention is applicable to subscriber self-installation.

## Description

### Field of the Invention

The present invention relates to radio communications subscriber apparatus and, in particular, although not exclusively, to the installation of equipment for new subscribers to a telecommunications network comprising a fixed wireless access system.

### Background to the Invention

In conventional copper wire based telephone system access networks, installation of a telephone line at a customer's premises involves attaching a copper wire to the customer's telephone equipment in order to connect it to a Public Switched Telephone Network (PSTN). The installation of the copper wire may involve digging up roads around the customer's premises and causes considerable inconvenience and expense.

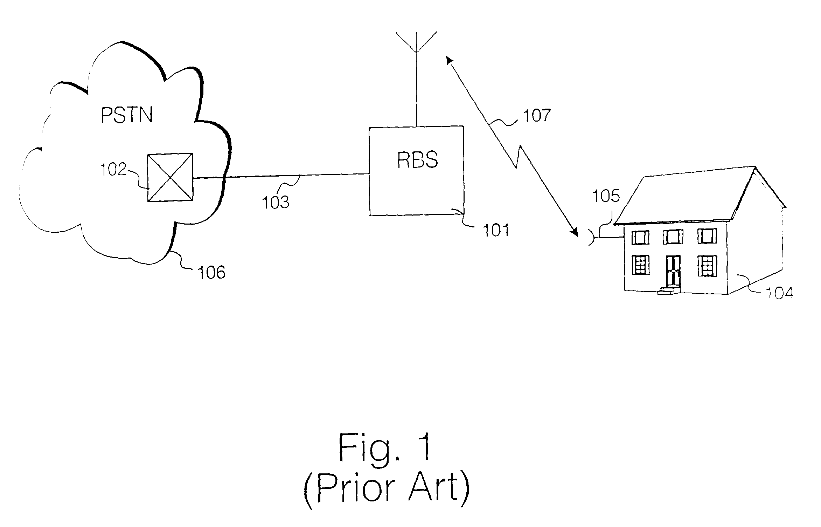

Fig. 1 of the accompanying drawings illustrates schematically part of a known Fixed Wireless Access (FWA) system, which overcomes some of the disadvantages of copper wire based telephone systems. A Radio Base Station (RBS) 101 is connected to central office switching equipment 102 (which may be part of a PSTN 106) by means of a backhaul cable 103. A customer's premises 104 is provided with a transceiver unit 105. The transceiver unit 105 forms part of a Residential Subscriber System (RSS) which can have one or more items of Network Terminal Equipment (NTEs) attached, such as a telephone handset, a personal computer (PC), a modem or a fax machine. The RSS communicates with RBS 101 by means of Radio Frequency (RF) links 107. This use of RBSs means that subscribers can be connected at their customer premises without the need for installing a copper cable between the customer's telephone equipment and the PSTN, as the RSS can communicate with the PSTN through the RBS by means of wireless links.

Each RBS may be able to provide telecommunication network services to thousands of RSSs, hence the cost per subscriber of providing a telecommunications access network to new subscribers is greatly reduced since the overall cost of providing a single RBS which can communicate with several thousand RSSs by means of RF links is cheaper than installing copper wire or optical fibre telephone systems to each individual subscriber's premises.

Although the use of FWA to provide customers with network services is not as expensive as wire based systems, known methods of creating FWA network services for new subscribers can still be considered expensive in today's competitive telecommunications market.

It is presently the case that terrestrial FWA deployment costs are frequently actually above budget for potential operators. Site visits are not an insignificant element to the deployment cost. In established markets where manpower is expensive, anything that consumes man-hours will contribute to the overall cost. Extra man-power can still be an issue in developing markets, where the necessary skills are in short supply (even though relatively cheap).

### Object of the Invention

The present invention seeks to provide improved subscriber installation equipment and a method of installation for a FWA system. The invention further seeks to provide equipment operable to allow optimal alignment to be achieved without the need of qualified trained personnel and special installation equipment. The present invention further seeks to provide a method of determining a choice of base station which provides an optimal link for a subscriber. The present invention still further seeks to provide a method of subscriber antenna alignment. In particular, the present invention seeks to provide an arrangement whereby communication equipment using directional antennas can be accurately aligned for best link performance and to minimise interference to other users.

### Summary of the Invention

In accordance with a first aspect of the invention, there is provided an subscriber directional antenna having indicating means whereby the quality of a base station identity (BID) signal can be determined which antenna is operable to scan the antenna in an arc of scan with respect to a selected fixed wireless access base station which transmits a BID signal; and,
whereby a preferred angle of operation of the directional antenna with respect to the selected fixed wireless access base station can be determined with reference to the signal quality indicating means.

The indicators are operable to indicate signal level and some form of signal quality measure e.g. signal vector error, signal to interference or timing stability. The form of the quality measure and any post processing will be dependent on the signal type and the radio system design. The processor analyses these inputs and drives the indicators according to the result and is preferably provided with a handle whereby it can be maintained in a temporary position for a pre-install survey.

The antenna arrangement preferably includes an electronic memory whereby the orientation of the antenna with respect to selected geographical co-ordinates and the best received signal is stored after a preliminary scan has been performed whereby the same orientation may be determined upon permanent installation of the antenna. The indicators can be selected from the group comprising visual indicators and audible indicators. The indicators can be conveniently mounted on or within the antenna body.

The initial step of selecting a base station may comprise the selection of one of a of a number of fixed wireless access base stations which, prima facie, are positioned to communicate by way of a wireless link with communications equipment situated at the subscribers premises, whereby, in the event that said first selected fixed wireless access base station cannot provide a sustainable received signal for the directional antenna, then the directional antenna is reoriented at the subscriber's premises such that the directional antenna is directed towards a second selected fixed wireless access base station, and the process is continued whereby a suitable base station is provisioned.

The link between a base station and a subscriber can be determined according to a number of metrics. The metrics can be selected from the following list: signal strength, signal power quality, proposed development, seasonal variation in landscape, adaptive-least fill basis, electro-magnetic interference. The fixed wireless access system can be developed. The fixed wireless access system can be under development.

In accordance with a second aspect of the invention, there is provided an antenna arrangement for providing communication links in a fixed wireless access system, the antenna including receiver means including a receive signal demodulator; wherein a signal processing unit is operable to receive signals from the received signal demodulator which signal processing unit includes indicators relating to a received signal.

In accordance with a further aspect of the invention, there is provided a method of operating a subscriber directional antenna comprising the steps of: operating the antenna which is provided with indicating means whereby the quality of a base station identity (BID) signal can be determined whereby to scan the antenna in an arc of scan with respect to a selected fixed wireless access base station which transmits a BID signal; and,
selecting a preferred angle of operation of the directional antenna with respect to the selected fixed wireless access base station with reference to the signal quality indicating means.

In accordance with a still further aspect of the invention, there is provided a method of installing subscriber antenna equipment at a subscriber's premises to a fixed wireless access communications network, the method comprising the steps of:
selecting a base station which; prima facie, is operable to communicate by way of a wireless link with communications equipment situated at the subscribers premises;
at the subscriber's premises, operating a directional antenna on a temporary basis and scanning the antenna in an arc of scan with respect to the selected fixed wireless access base station;
the directional antenna being provided with indicating means whereby the signal strength and quality of a received base station identity (BID) signal from a fixed wireless access base station can be determined across the arc of scan; and,
upon determining that a particular selected fixed wireless access base station can provide a signal:
mounting the directional antenna on a mount operable to allow the directional antenna to be scanned in an arc of scan with respect to the selected fixed wireless access base station;
operating the directional antenna in an arc of scan with respect to the selected fixed wireless access base station;
selecting a preferred angle of operation of the directional antenna towards the fixed wireless access base station, and:
   fixing the antenna in said direction.

Preferably a communications link is provisioned following alignment, whereby a communications link for the subscriber is provided to a fixed wireless access system. Upon determining that a particular selected fixed wireless access base station can provide a signal, the best link can be determined according to a number of metrics selected from the group comprising: signal strength, signal quality, proposed development, seasonal variation in landscape, adaptive-least fill basis, electro-magnetic interference.

The method will vary if, for example, the initial test does not correspond to results achieved where it is intended to permanently locate the antenna. Another permanent mounting position may need to be sought or a further base station may need to be determined.

The indicators should be capable of providing clear and unambiguous signals pertaining to alignment of the antenna with respect to a signal source, such a s a base station. For ease of manufacture and to enable such at reduced cost it is preferable that the indicators are built in to the equipment. LEDs and/or audible buzzers can conveniently be provided, but other types of indicators are possible.

Preferably, in the pre-install survey phase the processor will output according to at least three states, as follows:
1. Transceiver on and Functioning;
2. Signal received;
3. The received signal meets a pre-determined quality threshold.
In the alignment phase the processor analyses the received level and quality while the antenna arrangement is scanned across the signal direction (towards the base station in a FWA system). From the stored scan data the processor identifies the best data set and sets an acceptance window. When the antenna arrangement is rescanned the processor identifies when the received signal conditions are within the window. From such an indication the antenna can be secured in a preferred orientation

Specific implementations of the present invention configure the base station remotely with data relating to the new subscriber in order to avoid sending a team of engineers to the base station site.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates schematically part of a known Fixed Wireless Access (FWA) system;
Figure 2 a, b and c show a front view and the profiles of two alternative embodiments of a Transmitter-Receiver Unit in accordance with a first aspect of the invention;
Figure 3 provides a Functional Block Diagram of the invention;
Figure 4 shows a flow chart outlining the steps involved in surveying a subscriber premises in accordance with the invention;
Figure 5 shows a flow chart outlining the steps involved in aligning an antenna in accordance with the invention;

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practised without using these specific details. In other instances, well known methods and structures have not been described in detail so as not to unnecessarily obscure the present invention.

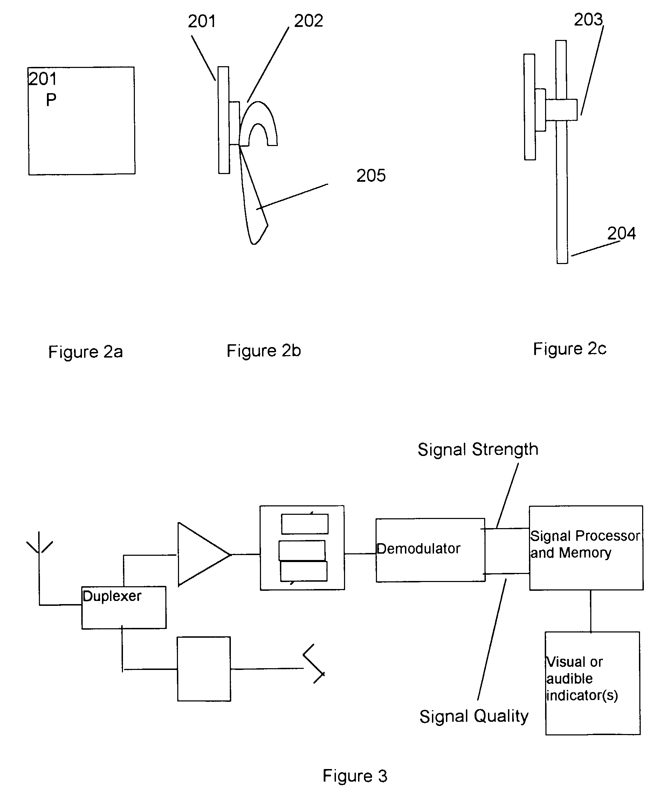

Referring now to Figure 2a, there is shown a front view of a directional antenna arrangement 201. In directional antenna systems the antenna is commonly integrated with the transceiver and this will be assumed in the description, although minor differences will occur when the antenna is remote from the transceiver, as would be apparent to those skilled. The antenna arrangement shown in Figure 2b has a transceiver with a temporary handle 202 attached for a pre-install survey and also, in Figure 2c a pole mounted antenna arrangement with a bracket 203 which provides for adjustment in azimuth and elevation. The bracket is mounted upon a pole 204, but the support for this bracket could be realised by a variety of mount/support means. In Figure 2b a lead 205 to a power source is shown. Upon installation there would also be provided a cable to the telecommunications equipment within the subscriber's premises, which cable may also comprise a power feed.

The input to the signal processing unit receives signals from the received signal demodulator and will include indicators relating to a received signal level and some form of signal quality measure e.g. signal vector error, signal to interference or timing stability. The form of the quality measure and any post processing will be dependent on the signal type and the radio system design. The processor analyses these inputs and drives the indicators according to the result.

In the pre-install survey phase the processor will output according to at least three states, as follows:
1. Transceiver on and Functioning.
2. Signal received.
3. The received signal meets a pre-determined quality threshold.

In the alignment phase the processor analyses the received level and quality while the antenna arrangement is scanned across the signal direction (towards the base station in a FWA system). From the stored scan data the processor identifies the best data set and sets an acceptance window. When the antenna arrangement is rescanned the processor identifies when the received signal conditions are within the window.

In the alignment mode the processor will output outputs according to at least four states, as follows:
1. Transceiver on and Functioning.
2. Signal received.
3. Scan successfully completed.
4. Transceiver aligned.
The key parameters for the indicators are that they should be clear and unambiguous, low cost and built in to the equipment, both LEDs and audible buzzers can conveniently be provided, but other types of indicators are possible.

Examples are given on how the indicators could be employed:

Light Emitting Diodes (LEDs) LEDs could be mounted either on the outer casing or within the case and viewable from outside through a window, via light pipes or the like. In both cases they need to be clearly visible to the installer and it may be necessary to duplicate the indicator position so as to be viewable from opposite sides.
To provide the up to 4 separate indications for the alignment phase there are a number of implementation options, similar indications may be used for the 3 survey stages:
• 4 separate LEDs, each giving a separate indication.
• 3 LEDs where the "ON" indication is all 3 on and the 3 go out successively as each stage is complete. E.g.

| | |
|---|---|
| On and working | 3 |
| signal received | 2 |
| scan complete | 1 |
| transceiver aligned | 0 |

• 2 LEDs where the "ON" indication is both on and the 2 indicate the different stages, e.g.

| | LED1 | LED2 |
|---|---|---|
| On and working | ON | ON |
| signal received | ON | OFF |
| scan complete | OFF | ON |
| transceiver aligned | OFF | OFF |

• Dual colour LEDs can provide the indication from a single device and hence a single viewing window in the equipment, e.g.

| | Colour1 | Colour2 |
|---|---|---|
| On and working | ON | ON |
| signal received | ON | OFF |
| scan complete | OFF | ON |
| transceiver aligned | OFF | OFF |

By using an intermittent drive to an LED all indications can be achieved with a single LED, e.g.

| | |
|---|---|
| On and working | On/Off at a low duty cycle e.g. once per 2s |
| signal received | On/Off at a 50% duty cycle e.g. a 0.5s rate |
| scan complete | On (continuous) |
| transceiver aligned | Off |

Buzzer: The buzzer or buzzers can be mounted inside the case and on the main circuit PCB, there is no need for an aperture in the outer case and the case may be used as a resonator. The advantage of an audible indication is that the installer can concentrate his viewing on other installation aspects and personal safety.

As for the LEDs up to 4 separate indications required an example as to how these may be realised is as follows:

| | |
|---|---|
| On and working | Intermittent "beep" at say once per 2s |
| signal received | Intermittent "beep" at say once per 0.5s |
| scan complete | One long (e.g. 2s) "beep" then back to signal received status |
| transceiver aligned | A continuous tone |

Many variations would be possible, as would be apparent to those skilled.

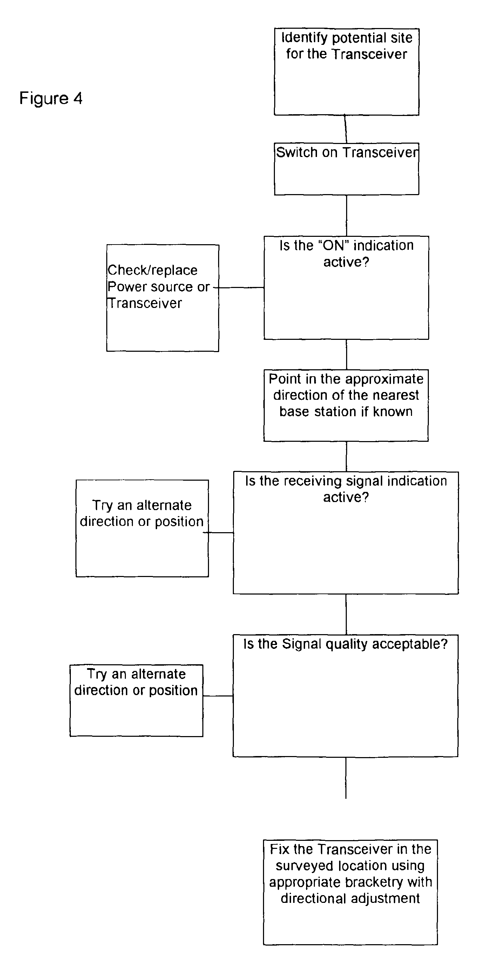

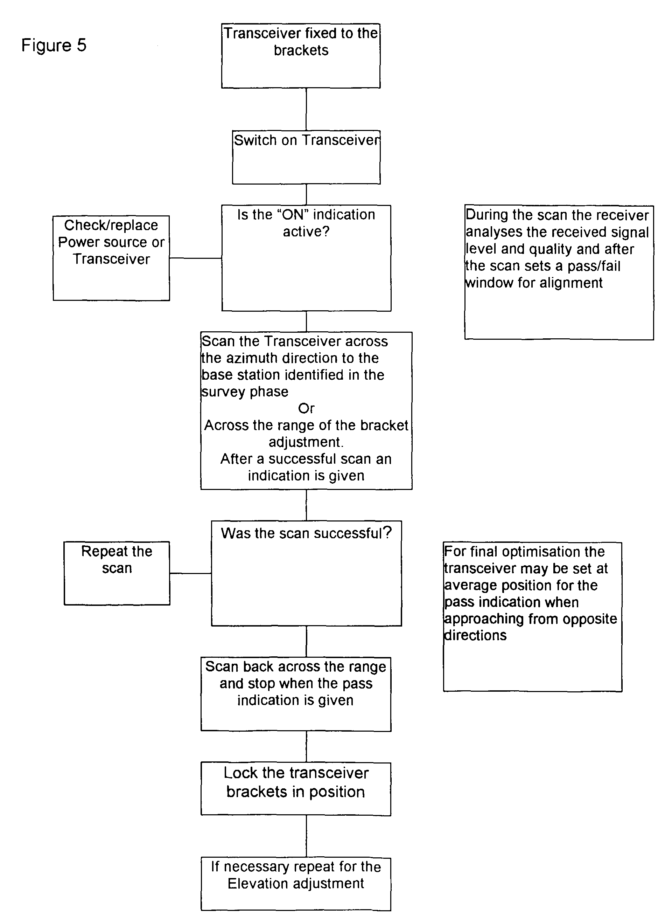

The installation process comprises two stages: a pre-install survey stage and a transceiver alignment stage. Where the approximate direction to a preferred base station is known and there is a high confidence in achieving a satisfactory install the survey phase may be bypassed. Figures 4 and 5 detail the process steps for antenna alignment in more detail.

### 1. Pre-Install Survey

The purpose of the pre-install survey is to determine a suitable direction for the antenna to operate at the subscriber's premises. With reference to Figure 3, the potential site is identified from a combination of the direction to a potential serving base station, building access and end-user preference. The antenna is mounted temporarily or even in a hand-held fashion.

For the survey the transceiver can be powered from the to-be-installed power supply or possibly, for professional installers, a battery pack. When switched on an "ON" indication is preferably provided to indicate that the apparatus is in an operating condition. The antenna arrangement is then pointed in a direction where there is believed to be a base station, if known, and when a signal is received a second indication is given. Note that whilst an actual line of sight may be known, obstacles in the signal path may prove that the most likely propagation path does not, in fact provide the best signal, with a reflected signal path providing an acceptable signal. If no indication is given, then the antenna arrangement is pointed in different directions and/or raised in height, in extreme cases it may be necessary to move to a new position to receive a signal.

Once a signal is received, adjustments in position and direction can be made until an acceptable signal quality is indicated. Should it not be possible to achieve the necessary signal quality then it would be necessary to move to a new position. Following a successful survey the antenna arrangement may be fixed in the identified position on brackets that allow azimuthal and, optionally, elevational adjustment to achieve alignment of the antenna arrangement.

### 2. Transceiver Alignment

With reference to Figure 5, once fixed to the brackets, the antenna arrangement is switched on and, provided that the system is functioning correctly, an "ON" indication is given. The antenna arrangement is then scanned across an azimuth plane in the general direction to the preferred base station - which will not, typically, employ the full range of adjustment of the bracket. During the scanning of the antenna arrangement, the signal level and signal quality is measured and at the end of the scan an indication is given confirming that an optimum set of parameters has been identified. If necessary the scan can be repeated. A histogram of the measurements can be built up or other records established - the strongest signal may not necessarily be the best signal: for instance, there may be greater background noise or interference in the direction of the strongest signal.

When a successful scan has been obtained the antenna arrangement is scanned back until an optimal direction is identified. As it is necessary to inset the pass window a more optimal direction may be identified by scanning from the other direction or scanning through the pass indication and identifying the mid range angle. Where necessary the process can be repeated for aligning in elevation.

The Transmitter-Receiver Unit has been shown integrated with the directional antenna, where a remote antenna is used only the antenna needs to be aligned. Two simple modifications comprise; a signal processing and memory function and a built in visual or audible indicator(s).

For the purposes of this disclosure, it is to be understood that a geo-stationary satellite communications system can also be considered as a fixed wireless access link in so far as a subscribers antenna is directed to a satellite base station which is directionally fixed in relation to the subscribers antenna.

Where mapping is of poor quality, either in detail or accuracy, it is possible to locate subscriber by the use of a GPS (Global Positioning Satellite) receiver to the site, whereby the subscriber location is provisioned with respect to the best available RBS. This is usually not necessary: the RBS is notified prior to installation nevertheless, when the subscriber site is on the edge of a cell boundary, local propagation conditions may dictate that the non-obvious RBS provides the best signals.

## Claims

1. A subscriber directional antenna (201) having indicating means whereby the quality of a base station identity (BID) signal can be determined which antenna is operable to scan the antenna in an arc of scan with respect to a selected fixed wireless access base station which transmits a BID signal; and, whereby a preferred angle of operation of the directional antenna with respect to the selected fixed wireless access base station can be determined with reference to the signal quality indicating means.

2. An arrangement according to claim 1 wherein the indicators are operable to indicate signal level and some form of signal quality measure as selected from the group comprising: signal vector error, signal to interference or timing stability.

3. An arrangement according to claim 1 wherein the arrangement is capable of being maintained in a temporary position for a pre-install survey.

4. An arrangement according to claim 1 wherein the indicators are selected from the group comprising visual indicators and audible indicators.

5. An arrangement according to claim 1 wherein the antenna arrangement includes an electronic memory whereby the orientation of the antenna with respect to selected geographical co-ordinates and the best received signal is stored after a preliminary scan has been performed whereby the same orientation may be determined upon permanent installation of the antenna.

6. An arrangement according to claim 1 wherein the indicators provide outputs according to at least three states, as follows:
transceiver on and functioning; signal received; the received signal meets a pre-determined quality threshold.

7. An antenna arrangement for providing communication links in a fixed wireless access system, the antenna including receiver means including a receive signal demodulator;
wherein a signal processing unit is operable to receive signals from the received signal demodulator which signal processing unit includes indicators relating to a received signal.

8. An arrangement according to claim 7 wherein, in the alignment phase, the signal processor is operable to analyse the received level and quality whilst the antenna arrangement is scanned across an arc of scan, and from the scan data the processor is operable to identify the best data set and determine an acceptance window.

9. An arrangement according to claim 1 wherein the antenna includes receiver means including a receive signal demodulator, geographical orientation detecting means, an electronic memory and a signal processing unit;
wherein a signal processing unit is operable to receive signals from the receive signal demodulator which signal processing unit includes indicators relating to a received signal.
wherein the geographical orientation detecting means are operable to determine data relating to the geographical orientation of the antenna;
wherein the electronic memory is operable to store the orientation of the antenna with respect to selected geographical co-ordinates and received signal parameters relative to scan direction with respect to the base station, and;
wherein the data relating to orientation is capable of being recalled whereby the same orientation may be determined upon permanent installation of the antenna.

10. A method of operating a subscriber directional antenna (201) comprising the steps of: operating the antenna which is provided with indicating means whereby the quality of a base station identity (BID) signal can be determined whereby to scan the antenna in an arc of scan with respect to a selected fixed wireless access base station which transmits a BID signal; and, selecting a preferred angle of operation of the directional antenna with respect to the selected fixed wireless access base station with reference to the signal quality indicating means.

11. A method of installing subscriber antenna equipment at a subscriber's premises to a fixed wireless access communications network, the method comprising the steps of:
selecting a base station which, prima facie, is operable to communicate by way of a wireless link with communications equipment situated at the subscribers premises;
at the subscriber's premises, operating a directional antenna (201) on a temporary basis and scanning the antenna in an arc of scan with respect to the selected fixed wireless access base station;
the directional antenna being provided with indicating means whereby the strength of a received base station identity (BID) signal from a fixed wireless access base station can be determined across the arc of scan; and,
upon determining that a particular selected fixed wireless access base station can provide a signal:
mounting the directional antenna on a mount operable to allow the directional antenna to be scanned in an arc of scan with respect to the selected fixed wireless access base station;
operating the directional antenna in an arc of scan with respect to the selected fixed wireless access base station;
selecting a preferred angle of operation of the directional antenna towards the fixed wireless access base station, and:
fixing the antenna in said direction.

12. A method according to claim 11 wherein a communications link is provisioned following alignment, whereby a communications link for the subscriber is provided to a fixed wireless access system.

13. A method according to claim 11 wherein, upon determining that a particular selected fixed wireless access base station can provide a signal, the best link can is determined according to a number of metrics selected from the group comprising: signal strength, signal quality, proposed development, seasonal variation in landscape, adaptive-least fill basis, electro-magnetic interference.

14. A method of installing subscriber antenna equipment at a subscriber's premises in a fixed wireless access communications network, the method comprising the steps of:
i selecting a base station which, prima facie, is operable to communicate by way of a wireless link with communications equipment situated at the subscribers premises;
ii at the subscriber's premises, operating a directional antenna (201) on a temporary basis and scanning the antenna in an arc of scan with respect to the selected fixed wireless access base station; the directional antenna being provided with indicating means whereby the strength of a received base station identity (BID) signal from a fixed wireless access base station can be determined across the arc of scan; and,
iii in the event that a particular selected fixed wireless access base station cannot provide a signal of sufficient received strength, moving the directional antenna to a second position at the subscriber's premises and
iv repeating steps ii to iii until a signal of sufficient strength has been determined;
v mounting the directional antenna on a mount operable to allow the directional antenna to be scanned in an arc of scan with respect to the selected fixed wireless access base station;
vi operating the directional antenna in an arc of scan with respect to the selected fixed wireless access base station;
vii selecting a preferred angle of operation of the directional antenna towards the fixed wireless access base station, and:
viii fixing the antenna in said direction.

15. A method according to claim 14 wherein a communications link is provisioned following alignment, whereby a communications link for the subscriber is provided to a fixed wireless access system.

16. A method according to claim 14 wherein, in the event that the particular selected fixed wireless access base station cannot provide a signal of sufficient received strength, a second base station is selected which is operable to communicate by way of a wireless link with communications apparatus situated at the subscribers premises.
